(19) **Europäisches Patentamt**

**European Patent Office**

**Office européen des brevets**

(11) **EP 0 868 101 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.$^7$: **H04Q 7/34**, H04Q 7/36

(21) Anmeldenummer: **98105450.5**

(22) Anmeldetag: **25.03.1998**

(54) **Verfahren zur Analyse der Verkehrsdichte in einem Mobilfunknetz**

Method for analysing the traffic density in a mobile radio network

Procédé d'analyse de la densité en trafic dans un réseau radio mobile

(84) Benannte Vertragsstaaten:
**AT DE FR GB IT**

(30) Priorität: **25.03.1997 DE 19712473**

(43) Veröffentlichungstag der Anmeldung:
**30.09.1998 Patentblatt 1998/40**

(73) Patentinhaber: **T-Mobile Deutschland GmbH**
**53227 Bonn (DE)**

(72) Erfinder:
• **Anlauf, Joachim k., Prof. Dr.**
**53340 Meckenheim (DE)**
• **Engel, Thomas**
**53229 Bonn (DE)**
• **Marger, Dieter, Dr.**
**53572 Unkel (DE)**

(74) Vertreter: **Riebling, Peter, Dr.-Ing.**
**Patentanwalt**
**Postfach 31 60**
**88113 Lindau (DE)**

(56) Entgegenhaltungen:
**EP-A- 0 631 453**       **EP-A- 0 861 010**
**DE-A- 19 533 472**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Analyse der Verkehrsdichte in einem Mobilfunknetz. Die rasch steigende Teilnehmeranzahl in Mobilfunknetzen nach dem GSM-Standard erfordert zur Sicherstellung der Kundenzufriedenheit eine kontinuierliche Steigerung der Netzkapazität, d.h. der Anzahl gleichzeitig möglicher Gespräche an einem räumlich begrenzten Ort. Diese ist im wesentlichen durch die limitierte Anzahl der zur Verfügung stehenden Funkfrequenzen beschränkt, welche wiederum die vorhandenen Sprachkanäle bestimmt. Die Erhöhung der Kapazität, die vor allem in den bereits stark ausgebauten Ballungsgebieten sowie in den Innenstädten notwendig ist, kann nur durch strukturelle Erweiterung der dort bestehenden Kleinzellennetze erreicht werden.

Eine der denkbaren Möglichkeiten zur Kapazitätssteigerung ist die Einführung von mikrozellularen Strukturen, d.h. eine vollständige Abdeckung von Ballungszentren mit Funkzellen sehr geringer Sendeleistung und in höchster Packungsdichte mit jeweils einer (oder mehreren) überlagerten Schirmzelle(n).

Eine weitere, wesentlich kostengünstigere Alternative stellt die Versorgung von lokalen Verkehrsschwerpunkten (sog. hot spots) mit einzelnen (Mikro-) Zellen dar. Dies kann als erste Migrationsstufe in Richtung der oben beschriebenen großflächigen Mikrozellenstruktur angesehen werden und wäre mittelfristig zur Abdeckung der Kapazitätsengpässe hinreichend. Voraussetzungen für eine optimale Planung und z. B. für den Einsatz der vorgenannten lokalen Variante sind neben der Existenz und der Stationarität von hot spots, die Möglichkeit, die Verkehrsdichte meßtechnisch zu erfassen. Es gilt somit, eine Bestimmung der Verkehrsdichte im Mobilfunknetz vorzunehmen. Hierbei ist es insbesondere erforderlich, zum einen den Nachweis zu führen, ob konstante lokale Verkehrskonzentrationen auftreten und zum anderen eine exakte örtliche Zuordnung solcher Konzentrationen zu finden. Zur letztgenannten Frage ist die deutsche Patentanmeldung DE 195 33 472 zu nennen, die ein Verfahren zu Ortszuordnung von Meßdaten ausgewählter Funkenngrößen eines zellularen Funknetzes offenbart. Hierbei werden durch die Mobilstationen des Mobilfunknetzes Sendeparameter mehrerer Feststationen bestimmt, die zu einer Ortszuordnung der Meßdaten verwendet werden.

Zu einer Analyse der Verkehrsdichte werden zur Zeit vor allem Verfahren mit Testsendern eingesetzt. Die Verfahren beruhen darauf, in vermuteten hot spots auf dem Gebiet einer überlagerten Basisstation einen Testsender zu betreiben, welcher von allen Mobilstationen der dort telefonierenden Kunden als mögliches Ziel für ein handover angesehen wird. Es wird der Verkehrsanteil bestimmt, den der Testsender von der betrachteten Basisstation bei einem realen Aufbau übernehmen würde. Dieser ist ein Maß für die Verkehrsdichte in dem betrachteten Gebiet. Vor dem Einsatz des Testsenders ist es jedoch notwendig, annähernd die lokalen Verkehrsschwerpunkte zu kennen, da dies zur Standortfindung zwingend erforderlich ist. Femer müssen nach der Festlegung des Standortes zur Anpassung der Sendeleistung umfangreiche Untersuchungen zu den Pegelverhältnissen und zur Ausdehnung des durch den Testsender versorgten Gebietes durchgeführt werden. Die Problematik der Standortgewinnung mit Antennenmontage und Bereitstellung der Stromversorgung sind als weitere Nachteile zu erwähnen.

Die nachveröffentlichte EP-A-0 861 010 offenbart ein Verfahren zum Ermitteln der räumlichen Verteilung des Verkehrsaufkommens in einem Mobitfunknetz, bei dem der betrachtete Bereich in Segmente aufgeteilt und jedem Segment eine Sollfeldstärke zugeordnet wird. Danach werden für jede Mobilstation Ist-Empfangspegel ermittelt, die von den Längen der Funkstrekken abhängen. Die Ist-Empfangspegel werden mit Soll-Empfangspegeln verglichen und die beste Übereinstimmung ermittelt. Hierdurch erfolgt eine Ortszuordnung der Mobilstationen zu einem Segment. Ein im Segment definierter Zählerstand wird erhöht, wobei die Zählerstände der Segmente die räumliche Verteilung des. Verkehrsaufkommens im betrachteten Bereich wiedergeben.

Aufgabe der vorliegenden Erfindung ist es somit, ein Verfahren bereitzustellen, das eine einfache Analyse der Verkehrsdichte in einem Mobilfunknetz erlaubt. Diese Aufgabe wird gelöst durch die Merkmale des vorliegenden Anspruches 1.Weitere vorteilhafte Merkmale der Erfindung sind in den abhängigen Ansprüchen angegeben.

Der Gegenstand der vorliegenden Erfindung besitzt den entscheidenden Vorteil, daß er allein mit den ohnehin im Mobilfunknetz vorhandenen Daten auskommt, um eine Analyse der Verkehrsdichte zu ermöglichen. Zusätzliche Einrichtungen wie Testsender werden entbehrlich, ebenso wie aufwendige flächendeckende Meßfahrten. Zwischen den Pegelvektoren und den geographischen Orten, an denen sie aufgezeichnet wurden, besteht ein direkter Zusammenhang. Da die Pegelwerte ein stetiges Verhalten in Abhängigkeit vom geographischen Ort aufweisen, können durch eine Analyse der Pegelvektoren bzw. der Verteilung der Punkte im Parameterraum, die durch die Vektoren repräsentiert werden, bereits Aussagen über die Verkehrsdichte gemacht werden, insbesondere über Häufungen von Mobilstationen, die sich als Häufungen von Punkten in der Punkteverteilung im Parameterraum bemerkbar machen. Allein durch Ermittlungen von Datenbereichen in den Daten, die solchen Häufungen in der Punkteverteilung entsprechen, kann somit bereits die Existenz von Gebieten mit hot spots nachgewiesen werden. Auf diese Datenbereiche wird im folgenden der Einfachheit halber als Häufungen Bezug genommen. Diese können einem Netzbetreiber geeignet angezeigt werden und der Betreiber kann dann entscheiden, ob eine genaue Bestimmung der Lage des oder der hot spots nötig ist oder es sich um eine unkritische Situation handelt.

Zur Charakterisierung des Aufenthaltsortes kommen insbesondere Basisstationskennungen, die Laufzeiten zwischen Feststation und Mobilstation oder die Empfangspegel der Feststationen in Frage. Die Zusammenfassung und Speicherung der Meßwerte in einem Pegelrrektor kann bereits in der Mobilstation erfolgen, kann jedoch ebenso erst netzseitig durchgeführt werden. Bevorzugt werden die Pegelwerte, die von den Mobilstationen bestimmt werden, gemittelt. Ebenso ist es zur Vermeidung von Störeinflüssen sinnvoll, eine Normierung der Pegelvektoren durchzuführen.

Zur netzseitigen Erfassung der Pegelwerte bzw. -vektoren, die von den Mobilstationen bestimmt wurden, sind sinnvollerweise Einrichtungen zur Datenerfassung vorzusehen, die auf den üblichen Übertragungsweg der von der Mobilstation ausgehenden Daten zugreifen, bevorzugt auf die netzseitigen Schnittstellen der Feststationen, und eine Erfassung der Daten durchführen. Hierzu können Protokolltesteinrichtungen Anwendung finden. Die somit ermittelten Daten werden an eine Auswerteeinheit im Netz weitergeleitet, die ein Analyseverfahren zur Verkehrsdichtebestimmung durchführt. Eine Häufung in der Punkteverteilung kann dann z. B. durch Ermittlung ähnlicher Pegelvektoren erfolgen. Hierzu wird sinnvollerweise ein Abstandsmaß berechnet, wie auch im folgenden noch weiter ausgeführt wird.

Zur Vereinfachung einer Weiterverarbeitung der Ergebnisse, insbesondere zu Zwecken einer graphischen Darstellung, kann eine Berechnung einer zweidimensionalen Projektion der Punkteverteilung im Parameterraum erfolgen. Man erhält somit bereits eine Karte", die Aufschlüsse über die Verkehrsdichte in dem betrachteten Gebiet gibt. In dieser Karte treten insbesondere Häufungen in der Verkehrsdichte deutlich hervor und können so einfach ermittelt und graphisch dargestellt werden, ohne daß eine aufwendige Zuordnung der Meßdaten zu geographischen Orten nötig wäre. Zur Berechnung einer solchen Projektion können verschiedene, aus dem Stand der Technik bekannte Verfahren Anwendung finden. Bevorzugt wird ein neuronales Netzwerkverfahren verwendet, wie z. B. Growing Self Organizing Networks oder eine Self Organizing Map, die im nach folgenden speziellen Beispiel näher erläutert wird.

Durch einen Vergleich der durch die Mobilstationen bestimmten Pegelwerte mit vorbestimmten Vergleichswerten kann auch eine konkrete Ortszuordnung der Pegelvektoren bzw. der ermittelten Häufungen durchgeführt werden. Somit kann das Verfahren darüberhinaus auch angewendet werden, um gezielte Aussagen über die geographische Verteilung der Verkehrsdichte zu treffen, insbesondere über lokale Verkehrskonzentrationen. Hierzu kann auf Ergebnisse von Prädiktionsverfahren zurückgegriffen werden, so daß wiederum keinerlei zusätzliche Einrichtungen im betreffenden Gebiet nötig sind. Es können auch Vergleichswerte in nunmehr gezielten Meßfahrten ermittelt werden, die in denjenigen Gebieten durchgeführt werden, in denen bereits die Existenz von hot spots durch das vorliegende Verfahren nachgewiesen werden konnte. Eine komplette Abdeckung des gesamten zu betrachtenden Gebietes durch Meßfahrten ist somit entbehrlich. Die entsprechenden Ergebnisse lassen sich für den Netzbetreiber zur Übersicht auf einer digitalisierten Karte visualisieren.

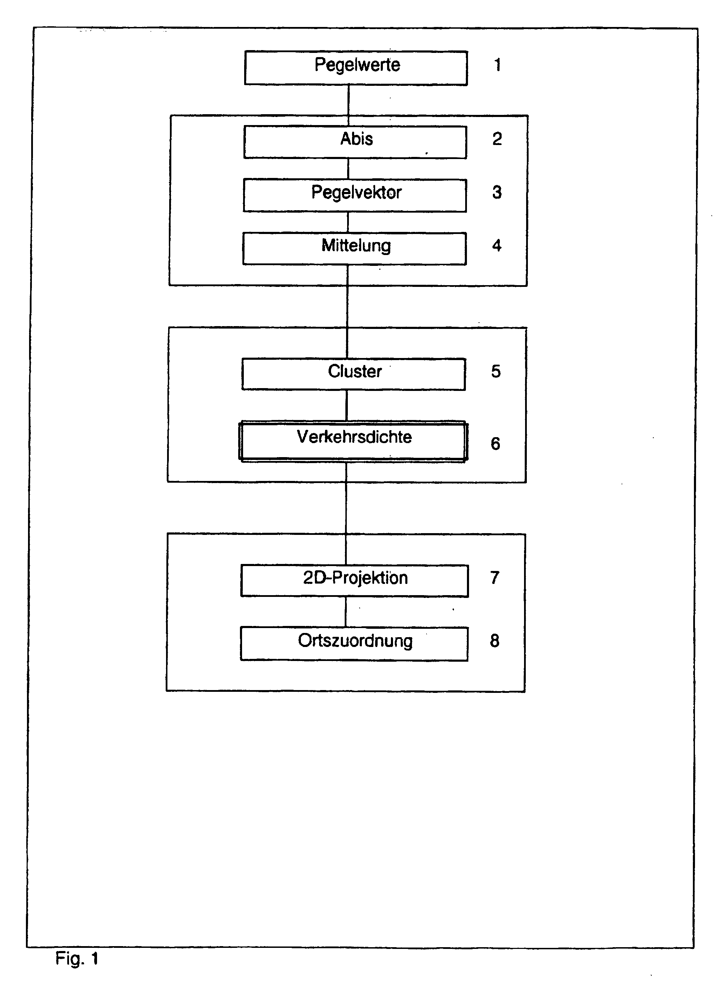

Im folgenden wird anhand der Figuren 1 bis 3 eine spezielle Ausgestaltung der Erfindung beschrieben, wobei speziell auf die Ermittlung von hot spots eingegangen wird. Es zeigen

Fig. 1: ein Blockdiagramm des Verfahrensablaufes

Fig. 2: eine zweidimensionale Projektion der Punkteverteilung im Parameterraum

Fig. 3: eine schematische Darstellung der vorhandenen hot spots im betrachteten Gebiet

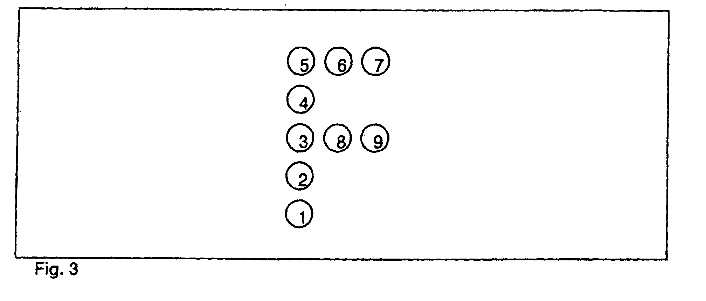

Im vorliegenden Beispiel wird von einem Gebiet ausgegangen, in dem 9 hot spots in Form eines großen "F" vorliegen (Fig. 3). Bei dem hier zu beschreibenden Verfahren wird davon ausgegangen, daß Mobilfunkstationen, die sich an nahe beieinander liegenden Orten befinden, ähnliche Feldstärken von den sie umgebenden Basisstationen empfangen. Die Empfangspegel der Server-Basisstation und die aller Basisstationen aus der Nachbarschaftsliste einer Serverzelle werden in einem ersten Schritt 1 permanent von der Mobilfunkstation gemessen. Die Mittelwerte der Pegel der Serverzelle und beispielsweise der maximal sechs stärksten Nachbarstationen werden periodisch (in GSM alle 480ms) an die Serverstation übermittelt und stehen dort auf der netzseitigen Schnittstelle ($A_{bis}$-Schnittstelle) zur Verfügung 2.

Die Basisstationen aus der Nachbarschaftsliste sind eindeutig durch N Zahlenpaare (Base Station Identity Code BSIC, Kanalnummer BCCH-NR.) gekennzeichnet. Diese Paare werden als Indizes eines N-dimensionalen Vektors erfaßt, in dessen Komponenten die gemessenen Empfangspegel der jeweiligen Basisstation eingetragen werden 3. Die an einem Ort gemessenen Pegel definieren damit als Parametervektor einen Pegelvektor, der einen bestimmten Punkt in dem oben definierten N-dimensionalen Pegelraum repräsentiert.

Jeder $A_{bis}$-Meßwert liefert einen neuen Vektor, den Pegelvektor, in dem allerdings nur maximal sieben Komponenten besetzt sind. Die übrigen Komponenten werden auf 0 gesetzt, um den Fehler klein zu halten.

Um fading Effekte zu reduzieren, werden die Pegelvektoren, die zu einem Gespräch gehören, über mehrere Sekunden gemittelt 4.

Es entsteht für jedes laufende Gespräch im Abstand von 480 ms ein Pegelvektor, der einen Punkt im Pegelraum repräsentiert. Die Verteilung dieser Vektoren bzw. Punkte gibt somit Hinweise über die Verkehrsdichte im betrachteten Gebiet. Diejenigen Gebiete im Pegelraum, an denen sich diese Punkte häufen (cluster) weisen auf hot spots hin, also auf Verkehrsschwerpunkte.

Die Pegelvektoren werden über einen frei wählbaren Zeitraum erfaßt. Für alle Pegelvektoren eines Zeitraumes werden Datenbereiche ermittelt, die Cluster (dichte Punktwolken) im Pegelraum darstellen 5. Dadurch ist es möglich, hot spots auch als Funktion der Zeit zu finden.

Für die Ermittlung der Cluster stehen verschiedene Algorithmen zur Verfügung. Alle Algorithmen basieren auf einer Abstandsberechnung der Vektoren im Pegelraum. Der Euklidische Abstand zwischen Pegelvektoren ist nicht geeignet, da er Verfälschungen in den Pegelwerten, wie die Dämpfung der Empfangssignale innerhalb von Gebäuden, oder ein systematischer Fehler bei der Messung durch die Mobilfunkstation, die alle Pegel in erster Näherung um den gleichen Faktor dämpfen, nicht berücksichtigt. Dadurch entstehen große euklidische Abstände im Pegelraum, die große Abstände im Ortsraum vortäuschen. Im folgenden wird eine verbesserte Abstandsberechnung dargestellt.

Da die Pegel auf der $A_{brs}$-Schnittstelle in dB (logarithmische Skala) gemessen werden, macht sich ein konstanter Dämpfungsfaktor für die Meßwerte aller Basisstationen als additive Konstante bemerkbar. Die Punkte im Pegelraum, die dadurch entstehen, daß eine Konstante zu allen Komponenten des Vektors addiert wird, repräsentieren daher denselben Pegelvektor. Diese Punkte liegen auf einer Geraden mit der Steigung 1 in allen Komponenten. Als Abstand zwischen zwei Pegelvektoren wird deshalb der Abstand der entsprechenden parallelen Geraden gewählt.

Für zwei gegebene Pegelvektoren sei $p_i$ die Differenz der logarithmischen Meßwerte für die Basisstation mit dem Index i. Dann zeigt eine einfache, geometrische Betrachtung, daß der Abstand d zwischen den parallelen Geraden

$$d = \sqrt{\sum_{i=1}^{N} p_i^2 - \frac{1}{N} \cdot \left( \sum_{i=1}^{N} p_i \right)^2}$$

beträgt. Wie man leicht zeigen kann, hat dieser Abstand die gewünschte Eigenschaft, daß er unabhängig von einer additiven Konstante ist.

Die Dichte der Gespräche (also Anzahl der Gespräche / km$^2$) kann bereits aus der Variation der Pegel zwischen den Pegelvektoren innerhalb des Clusters bestimmt werden 6. Hierzu ist kein exaktes Prädiktionsmodell notwendig, das absolute Pegelwerte als Funktion des Ortes vorhersagt, lediglich die Veränderung der Pegel als Funktion des Ortes muß annähernd ermittelt werden (z.B. in dB / km). Ist insbesondere die Existenz von hot spots nachgewiesen, so werden Pegelvektoren berechnet, die jeweils das Zentrum eines Clusters im Pegelraum definieren. Diesen Zentrums-Vektoren wird jeweils die ermittelte Gesprächsdichte für den betreffenden Cluster zugeordnet. Damit kann bereits die gewünschte Aussage über die Verkehrsdichte getroffen werden.

Für die zusätzliche Option einer graphischen Darstellung 7 bzw. einer Ortszuordnung 8 stehen vor allem zwei Möglichkeiten zur Verfügung

a) Lokalisierung mittels Prädiktionsdaten: Liegen für das betrachtete Gebiet genaue Prädiktionsdaten vor (Vorausberechnung der zu messenden Pegelwerte), kann der Ort aus dem Vergleich des Pegelvektors im Zentrum des hot spots mit den Prädiktionsdaten gefunden werden. Hierzu wird auch auf die bereits zitierte DE 195 33 472 verwiesen.
b) Lokalisierung mittels Online-Messung mit einem Meßfahrzeug: Ist die Existenz von hot spots nachgewiesen, so kann durch gezielte Suche mit einem Meßfahrzeug der Ort des Pegelvektors online bestimmt werden. Dazu wird durch Beobachtung des momentan gemessenen Pegelvektors der Abstand zum gesuchten Pegelvektor bestimmt und als Kostenfunktion eines Optimierungsalgorithmus betrachtet. Alle gängigen Optimierungsstrategien können benutzt werden, um die Richtung zu bestimmen, in die das Meßfahrzeug fahren muß, um den Abstand zu verkleinern (z.B. Gradientenverfahren, konjugiertes Gradientenverfahren, etc.).
Bei beiden Verfahren können die die Signalaufzeit charakterisierenden Parameter der Basisstationssignale(timing advance), die den möglichen Aufenthaltsort der Mobilstation auf einen Kreisring bekannter Ausmaße um die Serverzelle beschränkt, benutzt werden, um den Suchraum zu verkleinern.

Der im folgenden beschriebene neuronale Netzwerkalgorithmus erlaubt darüberhinaus eine einfache Umformung der Daten, die einer zweidimensionalen Projektion der Punkteverteilung entspricht 7. Damit wird eine graphische Darstellung der Daten ermöglicht, die das Auffinden von Clustern weiter erleichtern kann.

Ein spezieller neuronaler Netzwerkalgorithmus ist Kohonens Self Organizing Map (SOM). Dieser Algorithmus erlaubt es, die Dichte von Vektoren im N-dimensionalen Pegelraum abzuschätzen und in einer topologieerhaltenden 2-dim. Karte darzustellen. Die Karte wird durch unüberwachtes Training mit den gemessenen Pegelvektoren gewonnen. Da die Orte aller Pegelvektor-Messungen ebenfalls auf einer 2-dim. Fläche, der Erdoberfläche, liegen, und die Pegel im wesentlichen stetig vom Ort abhängen, liegen auch die Pegelvektoren auf einer 2-dim. Mannigfaltigkeit des N-dim. Raumes. Bei optimalem Training wird sich Kohonens SOM als 2-dim. Karte genau in die 2-dim. Mannigfaltigkeit des N-dim. Pegelraumes legen. Das Resultat ist eine verzerrte, 2-dim. Landkarte mit den zugehörigen N-dim. Pegelvektoren.

Kurz zusammengefaßt läuft das Verfahren folgendermaßen ab:

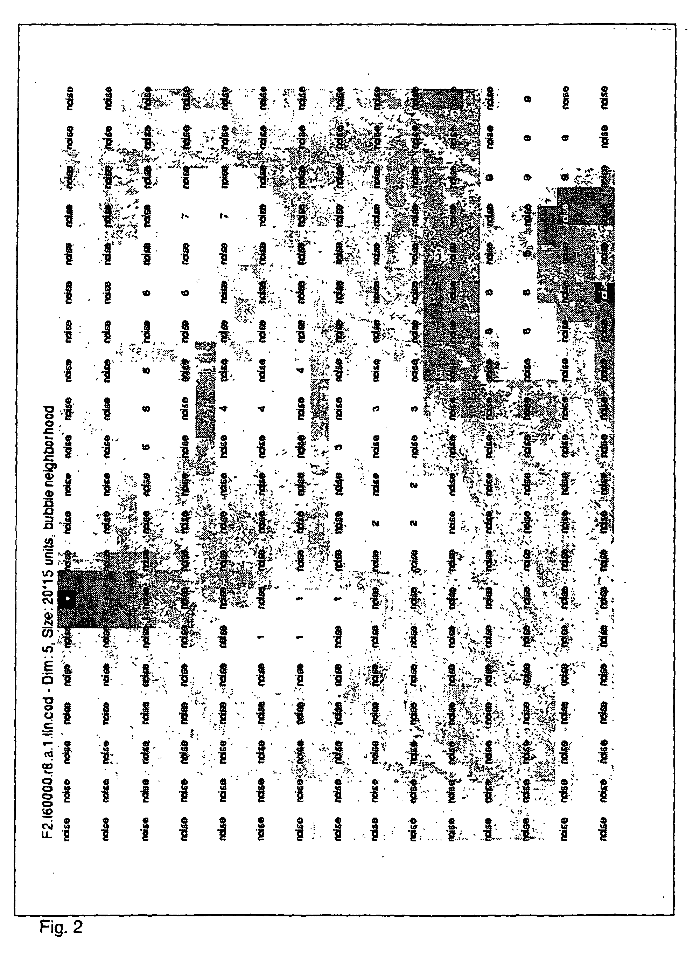

Die Neuronen sind in einer 2-dim. Gitterstruktur, der "Karte", angeordnet. Jedes Neuron speichert einen N-dim. Pegelvektor, der anfangs entweder zufällig, oder besser mit ungefähren Prädiktionsdaten initialisiert wird. Nacheinander werden iterativ alle $A_{bis}$-Pegelvektoren präsentiert. Für jeden Vektor wird ein Gewinner-Neuron ermittelt, das den kleinsten Abstand (Abstandsfunktion zwischen Pegelvektoren s.u.) zum Eingabevektor hat. Der gespeicherte Pegelvektor des Gewinnerneurons wird ein wenig an den aktuellen Eingabevektor angepaßt (also noch ähnlicher gemacht). Auch die Nachbar-Neuronen des Gewinners (2-dim. Nachbarschaft) werden ein wenig an den Eingabevektor angepaßt, aber weniger weit als das Gewinnerneuron. Die Lernkonstante, mit der der Verschiebungsvektor skaliert wird, wird mit fortschreitender Lernzeit immer kleiner, so daß sich am Ende ein stabiler Zustand einstellt. Das 2-dim. Neuronennetz stellt dann eine topologie-erhaltende Abbildung (nichtlineare "Projektion") des N-dim. Pegelraumes dar, wobei sich in Gebieten hoher Gesprächsdichte, viele Neuronen versammeln (geringer Abstand der Pegelvektoren von benachbarten Neuronen). In Gebieten geringer Gesprächsdichte sind die Abstände im Pegelraum entsprechend größer. Das kann z. B. durch eine Grauwertkodierung visualisiert werden (Fig. 2), bei denen die Felder zwischen zwei Neuronen entsprechend der Abstände im Pegelraum gefärbt werden:

dunkel:    große Pegelvektorabstände
hell:        kleine Pegelvektorabstände

Helle Flecken bezeichnen dann die hot spots, deren Anzahl durch visuelle Inspektion sofort bestimmt werden kann.

Nach dem Training der Kohonen-SOM erkennt man im vorliegenden Fall ganz deutlich 9 hot spots, die, bis auf topologische Verzerrungen, dem realen Vorkommen von Hot Spots im betrachteten Gebiet entsprechen. Durch eine Ortszuordnung der Ergebnisse nach den beschriebenen Verfahren a) oder b) kann die Darstellung geographisch korrekt und somit entzerrt wiedergegeben werden (Fig. 3).

**Patentansprüche**

1. Verfahren zur Analyse der Verkehrsdichte in einem Mobilfunknetz mit Mobilstationen und Feststationen, wobei die Mobilstationen Pegelwerte mehrerer Feststationen bestimmen (1), die geeignet sind, den Aufenthaltsort der Mobilstation zu charakterisieren, wobei durch eine Datenerfassungseinheit die bestimmten Pegelwerte pro Mobilstation erfaßt und derart vektoriell abgelegt werden (2, 3), daß die Pegelvektoren eine Punkteverteilung in einem mehrdimensionalen Parameterraum repräsentieren, und eine Analyseeinheit eine Analyse der Daten durchführt, **dadurch gekennzeichnet,**
**daß** in einem Analyseschritt Datenbereiche ermittelt werden, die Häufungen in der Punkteverteilung im Parameterraum entsprechen, wobei die Anzahl der Gespräche pro Flächeneinheit aus der Variation der Pegel zwischen den Pegelvektoren innerhalb der Häufung (Cluster) bestimmt wird (6) und Zentrumsvektoren berechnet werden, die das Zentrum der Häufung im Parameterraum definieren.

2. Verfahren nach Anspruch 1,
**dadurch gekennzeichnet,**
**daß** eine Mittelung der bestimmten Pegelwerte durchgeführt wird (4).

3. Verfahren nach einem der vorhergehenden Ansprüche,
**dadurch gekennzeichnet,**
**daß** eine Normierung der Pegelvektoren erfolgt.

4. Verfahren nach Anspruch 1,
**dadurch gekennzeichnet,**
**daß** in dem betreffenden Analyseschritt eine Ermittlung ähnlicher Pegelvektoren erfolgt.

5. Verfahren nach Anspruch 1 bis 4,
**dadurch gekennzeichnet,**
**daß** das Auftreten von Datenbereichen, die Häufungen in der Punkteverteilung entsprechen, in geeigneter Weise angezeigt wird.

6. Verfahren nach einem der vorhergehenden Ansprüche,
**dadurch gekennzeichnet,**
**daß** eine Umformung der Daten erfolgt, die einer zweidimensionalen Projektion der Punkteverteilung im Parameterraum entsprechen (7).

7. Verfahren nach Anspruch 6,
**dadurch gekennzeichnet,**
**daß** eine graphische Darstellung der Daten entsprechend einer zweidimensionalen Projektion erfolgt.

8. Verfahren nach einem der Ansprüche 6 oder 7,
**dadurch gekennzeichnet,**
**daß** zur Umformung der Daten ein neuronales Netzwerkverfahren verwendet wird.

9. Verfahren nach einem der vorhergehenden Ansprüche,
**dadurch gekennzeichnet,**
**daß** durch einen Vergleich der bestimmten Pegelwerte mit vorbestimmten Vergleichswerten eine Ortszuordnung der Pegetvektoren und/oder der Häufungen entsprechenden Datenbereichen durchgeführt wird.

**10.** Verfahren nach Anspruch 9,
**dadurch gekennzeichnet,**
**daß** als vorbestimmte Vergleichswerte die Ergebnisse eines Prädiktionsverfahrens dieser Pegelwerte verwendet werden.

**11.** Verfahren nach Anspruch 9,
**dadurch gekennzeichnet,**
**daß** als vorbestimmte Vergleichswerte die Ergebnisse von Meßfahrten in dem betreffenden Gebiet verwendet werden.

**12.** Verfahren nach Anspruch 11,
**dadurch gekennzeichnet,**
**daß** die Meßergebnisse während der Meßfahrt mit den bestimmten Pegelwerten verglichen werden und aus dem Ergebnis eine Fahrtrichtung und/oder Fahrtroute für das Meßfahrzeug ermittelt wird.

**13.** Verfahren nach einem der Ansprüche 9 bis 12,
**dadurch gekennzeichnet,**
**daß** die den Pegelvektoren und/oder den Häufungen zugeordneten Orte auf einer digitalen Karte visualisiert werden (8).

**Claims**

**1.** Method for analysing the traffic density in a mobile communications network having mobile stations and fixed stations, wherein the mobile stations determine level values of a plurality of fixed stations (1) which are suitable for **characterising** the location of the mobile station, wherein by means of a data capture unit the level values determined per mobile station are captured and stored as vectors in such a way (2, 3) that the level vectors represent a point distribution in a multidimensional parameter space and an analysis unit carries out an analysis of the data, **characterised in that** in an analysis step data domains are determined which correspond to clusters in the point distribution in the parameter space, wherein the number of calls per unit area is determined from the variation in level between the level vectors within the cluster (6) and centre vectors are calculated which define the centre of the cluster in the parameter space.

**2.** Method according to claim 1, **characterised in that** averaging of the level values determined is carried out (4).

**3.** Method according to one of the preceding claims, **characterised in that** normalisation of the level vectors is carried out.

**4.** Method according to claim 1, **characterised in that** in the analysis step in question similar level vectors are determined.

**5.** Method according to claim 1 to 4, **characterised in that** the occurrence of data domains corresponding to clusters in the point distribution is displayed in suitable manner.

**6.** Method according to one of the preceding claims, **characterised in that** transformation of the data ensues which correspond to a two-dimensional projection of the point distribution in the parameter space (7).

**7.** Method according to claim 6, **characterised in that** a graphic representation of the data is made corresponding to a two-dimensional projection.

**8.** Method according to one of claims 6 or 7, **characterised in that** a neural network method is used for transforming the data.

**9.** Method according to one of the preceding claims, **characterised in that** by means of a comparison of the level values determined with predetermined reference values a positional assignment of the level vectors and/or the clusters to corresponding data domains is carried out.

**10.** Method according to claim 9, **characterised in that** the results of a predictive method for these level values are used for the predetermined reference values.

**11.** Method according to claim 9, **characterised in that** the results of measuring test runs in the area concerned are used as predetermined reference values.

**12.** Method according to claim 11, **characterised in that** the results of measurement during the test run are compared with the determined level values and from the result a travel direction and/or travel route for measuring travel are determined.

**13.** Method according to claim 9 to 12, **characterised in that** the level vectors and/or clusters of the assigned places are visualized on a digital map (8).

**Revendications**

**1.** Procédé pour analyser la densité du trafic dans un réseau radiotéléphonique mobile avec des stations mobiles et des stations fixes, selon lequel les stations mobiles définissent (1) des valeurs de niveau de plusieurs stations fixes qui sont aptes à **caractériser** la position de la station mobile, et grâce à une unité de collecte de données, les valeurs de niveau définies sont détectées pour chaque station mobile et sont mémorisées de manière vectorielle (2, 3) de telle sorte que les vecteurs de niveau représentent une répartition par points dans un espace de paramètres à plusieurs dimensions, et une unité d'analyse effectue une analyse des données,

**caractérisé en ce que** l'on détermine lors d'une phase d'analyse des zones de données qui correspondent à des accumulations dans la répartition par points dans l'espace de paramètres, le nombre d'appels par unité de surface étant défini (6) à partir de la variation des niveaux entre les vecteurs de niveau à l'intérieur de l'accumulation (groupe), et on calcule des vecteurs de centre qui définissent le centre de l'accumulation dans l'espace de paramètres.

**2.** Procédé selon la revendication 1, **caractérisé en ce qu'**un calcul de la moyenne des valeurs de niveau définies est effectué (4).

**3.** Procédé selon l'une des revendications précédentes, **caractérisé en ce qu'**une normalisation des vecteurs de niveau a lieu.

**4.** Procédé selon la revendication 1, **caractérisé en ce qu'**une détermination de vecteurs de niveau similaires a lieu lors de la phase d'analyse concernée.

**5.** Procédé selon les revendications 1 à 4, **caractérisé en ce que** l'apparition de zones de données qui correspondent à des accumulations dans la répartition par points est indiquée d'une manière appropriée.

**6.** Procédé selon l'une des revendications précédentes, **caractérisé en ce que** les données qui correspondent à une projection en deux dimensions de la répartition par points sont converties (7).

**7.** Procédé selon la revendication 6, **caractérisé en ce qu'**une présentation graphique des données a lieu suivant une projection en deux dimensions.

**8.** Procédé selon la revendication 6 ou 7, **caractérisé en ce qu'**on utilise pour convertir les données un procédé de réseau neuronal.

**9.** Procédé selon l'une des revendications précédentes, **caractérisé en ce que** grâce à une comparaison des valeurs de niveau définies avec des valeurs comparatives prédéfinies, on effectue une attribution de lieux des vecteurs de niveau et/ou des zones correspondant à des accumulations.

**10.** Procédé selon la revendication 9, **caractérisé en ce qu'**on utilise comme valeurs comparatives prédéfinies les résultats d'un procédé de prévision de ces valeurs de niveau.

**11.** Procédé selon la revendication 9, **caractérisé en ce qu'**on utilise comme valeurs comparatives les résultats de trajets de mesure dans la zone concernée.

**12.** Procédé selon la revendication 11, **caractérisé en ce que** les résultats sont comparés pendant le trajet de mesure avec les valeurs de niveau définies, et un sens de déplacement et/ou un itinéraire pour le véhicule de mesure est déterminé à partir du résultat.

**13.** Procédé selon l'une des revendications 9 à 12, **caractérisé en ce que** les lieux associés aux vecteurs de niveau et/ou aux accumulations sont visualisés (8) sur une carte numérique.

| | |
|---|---|
| Pegelwerte | 1 |

| | |
|---|---|
| Abis | 2 |
| Pegelvektor | 3 |
| Mittelung | 4 |

| | |
|---|---|
| Cluster | 5 |
| Verkehrsdichte | 6 |

| | |
|---|---|
| 2D-Projektion | 7 |
| Ortszuordnung | 8 |

Fig. 1

Fig. 2

Fig. 3